(19) **Europäisches Patentamt**

**European Patent Office**

**Office européen des brevets**

(11) **EP 0 758 601 B1**

(12) **EUROPÄISCHE PATENTSCHRIFT**

(45) Veröffentlichungstag und Bekanntmachung des Hinweises auf die Patenterteilung:
**28.11.2001 Patentblatt 2001/48**

(51) Int Cl.$^7$: **B60T 8/00**

(21) Anmeldenummer: **96110701.8**

(22) Anmeldetag: **03.07.1996**

(54) **Verfahren zur On-Board-Ermittlung von fahrdynamischen Sicherheitsreserven von Nutzfahrzeugen**

Procedure for on board determination of dynamic safety margins of utility vehicles

Procédé pour mise à disposition dans le véhicule de réserves de sécurité dynamique pour véhicules utilitaires

(84) Benannte Vertragsstaaten:
**DE FR GB IT NL SE**

(30) Priorität: **11.08.1995 DE 19529539**

(43) Veröffentlichungstag der Anmeldung:
**19.02.1997 Patentblatt 1997/08**

(73) Patentinhaber: **MAN Nutzfahrzeuge Aktiengesellschaft**
**80976 München (DE)**

(72) Erfinder:
• **Jung, Christoph, Dipl.-Ing.**
**85757 Karlsfeld (DE)**
• **Hirschberg, Wolfgang, Dr.**
**4400 Steyr- St. Ulrich (AT)**

(56) Entgegenhaltungen:
**DE-A- 4 218 034        DE-A- 4 325 413**
**US-A- 5 435 193**

**Beschreibung**

Die Erfindung betrifft ein Verfahren nach dem Oberbegriff des Anspruches 1.

Ein Verfahren dieser Art ist aus der DE 42 00 997 C2 bekannt. Dabei wird der Kraftschlußwert in Längsrichtung und in Querrichtung getrennt aus gemessenen Fahrzeugwerten ermittelt. Aus diesen Werten wird durch vektorielle Kombination der momentane Fahrzustand erfaßt und durch Vergleich mit einer Grenzkurve die tatsächlich vorhandene Sicherheitsreserve ermittelt. Die Grenzkurve ist in einem Rechner abgespeichert und wird affin vergrößert oder verkleinert, je nach dem, ob eine größere Änderung des Reibwertes ermittelt wurde oder nicht. Durch die getrennte Ermittlung der Kraftschlußwerte in Längs- und Querrichtung kann auch eine Aussage über die Fahrsicherheit bei gemischten Fahrzuständen, z. B. einem Bremsen in der Kurve, gemacht werden. Das Verfahren ist für Personenkraftwagen, auch allradgetriebene, geeignet. Der Beladungszustand des Personenkraftwagens wurde nicht berücksichtigt.

Dokument US-A-5,435,193 offenbart ein Verfahren zur ON-BOARD-Ermittlung von fahrdynamischen Sicherheitsreserven von Nutzfahrzeugen, wobei der Kraftschluß zwischen Rädern und Fahrbahn eines definierten Nutzfahrzeuges in einem beliebigen bekannten Beladungszustand unter Anderem mittels eines gemessenen Wankwinkels ermittelt wird.

Bei weiteren, bekannten Verfahren, wie z. B. in der DE 43 00 481 A1 beschrieben, wird durch ASR und ABS die Durchdrehneigung bzw. Blockierneigung mindestens eines Rades der Reibwert zwischen Rad und Fahrbahn in Längsrichtung ermittelt. Die mögliche Querbeschleunigung wird daraus abgeleitet. Die Werte sind meistens nicht genügend genau, oftmals, besonders für Kurvenfahrten, nicht verwendbar. Auf den Beladungszustand, was die Masse und deren Schwerpunktlage betrifft, wird nicht eingegangen.

Verfahren, wie z. B. in der DE 40 10 507 C1 und der EP 0 345 817 B1 beschrieben, die einen Drehzahlunterschied zwischen einem angetriebenen und einen nicht angetriebenen Rad ermitteln, benutzen den annähernd linearen Bereich der Schlupfkennlinien. Eine Vorhersage über das Kraftschlußpotential im nicht mehr linearen Grenzbereich ist daher nicht möglich bzw. ungenau. Außerdem wird bei diesem Verfahren nur der Reibwert in Radumfangsrichtung ermittelt, Reibwerte quer zur Umfangsrichtung bleiben unberücksichtigt.

Der Erfindung liegt die Aufgabe zugrunde, ein Verfahren der eingangs genannten Art zu schaffen, das möglichst genaue fahrdynamische Werte des Fahrzeuges und weitere Parameter erfaßt, damit dem Fahrer eine wirksame Unterstützung durch Informationen über die momentanen Sicherheitsreserven seines Fahrzeuges angeboten werden können.

Die Aufgabe wird erfindungsgemäß durch die Merkmale des Anspruches 1 gelöst.

Bei dem erfindungsgemäßen Verfahren ist zunächst die Masse der Beladung und ihre Position zu bestimmen, da beides für Nutzfahrzeuge eine wichtige Voraussetzung für die Ermittlung von Sicherheitsreserven ist.

Bei Nutzfahrzeugen führen Querbeschleunigungen zu ausgeprägten Wankbewegungen. Dabei ist es unerheblich, ob diese Querbeschleunigungen von Fliehbeschleunigungen aus einer Kurvenfahrt, oder als Folge von schrägen Fahrbahnen über den Anteil der Gravitation kommen. Um diese Erkenntnis auszunutzen, ist es erforderlich, die Wanksteifigkeit für ein bestimmtes Fahrzeug zu kennen. Die Wanksteifigkeit ist u. a. abhängig von der Art und Steifigkeit des Rahmens, von der Federung, von der Anzahl der Achsen und Reifen und der Beladung. Die Ermittlung der Wanksteifigkeit erfolgt vorzugsweise auf einer Kreisfahrt-Versuchsbahn, auf welcher das entsprechende Nutzfahrzeug auf einem bestimmten Kreisradius mit mehreren Geschwindigkeiten gefahren wird. Dieser Vorgang wird mit unterschiedlichen Beladungen von unbeladen bis volle Beladung bei verschiedenen Beladungshöhen durchgeführt. Als Wankwinkel wird vorzugsweise der relative Wankwinkel zwischen Fahrzeugrahmen und mindestens einer Achse, z. B. der j-ten Achse, gemessen. Die Querbeschleunigung wird meßtechnisch erfaßt. Die ermittelten Kurvenscharen der Wanksteifigkeit, die für genau diesen Fahrzeugtyp Gültigkeit haben, werden in einem Rechner abgespeichert und stehen für weitere Berechnungen zur Verfügung. Die Bestimmung des Beladungszustandes erfolgt vorzugsweise bei Beginn einer Fahrt und wird bei dem fahrzeugspezifisch bekannten Nutzfahrzeug durch die Bestimmung der Wanksteifigkeit z.B. bei einer Fahrt in einer Kurve und durch Vergleich mit abgespeicherten Daten, ermittelt.

Unter dem momentan vorliegenden Kraftschluß versteht man den Quotienten zwischen der maximal möglichen Kontaktkraft $F_{max}$ und der Aufstandskraft $F_z$.

Die Kenntnis des fahrzeugtypischen Verhaltens eines Nutzfahrzeuges ist für die Berechnung des Kraftschlusses und der Sicherheitsreserven im linearen und im nicht linearen Kraftschlußbereich der Reifen wichtig. So unterscheidet sich z. B. ein dreiachsiges Fahrzeug mit einer gelenkten Achse von einem zweiachsigen durch größere Richtungsstabilität in Fahrzeuglängsrichtung und dadurch bei Kurvenfahrten durch den Bedarf eines größeren Lenkeinschlages des Dreiachser-Nutzfahrzeuges.

Wird mit einem Fahrzeug ein Bogen stationär befahren, so setzt sich der Lenkwinkelbedarf aus dem kinematischen Ackermann-Lenkwinkel und dem dynamischen Korrekturlenkwinkel zusammen: Der Ackermann-Lenkwinkel ist ein fester, fahrzeugspezifischer Lenkeinschlag für das querkraftfreie Befahren eines Kreisbogens mit einem festen Radius, d. h., beim Fahren mit sehr kleiner Geschwindigkeit. Der dynamische Korrekturlenkwinkel kennzeichnet die Steuertendenz des Fahrzeuges bei zunehmender Querbeschleunigung.

Im beginnenden, nicht linearen Bereich ist bei übersteuernden Fahrzeugen ein geringerer Lenkwinkel und bei untersteuernden Fahrzeugen ein größerer Lenkwinkel zur, Einhaltung des Kurses nötig. Dieses Verhalten wird mit der Lenksteifigkeit beschrieben.

In Anlehnung an diese Verhaltensweisen wird bei dem erfindungsgemäßen Verfahren die Relative-Lenk-Wanksteifigkeit dazu benutzt, um den fahrzeugspezifischen Zusammenhang zwischen dem Wankwinkel und dem Korrekturlenkwinkel, bei einer bestimmten Beladung - abhängig vom Reibwert zwischen Rad und Fahrbahn - zu ermitteln. Dazu wird in Fahrversuchen bei einer bestimmten Beladung und bei einer bestimmten Fahrbahn jeweils der relative Wankwinkel und der Korrekturlenkwinkel ermittelt. Diese Messungen werden mit unterschiedlichen Beladungen und unterschiedlichen Fahrbahnbelägen wiederholt. Die ermittelten Kurven der Relativen-Lenk-Wanksteifigkeit werden ebenfalls für die weiteren Berechnungen abgespeichert.

Das Kraftschlußkennfeld wird approximiert und gilt zunächst für eine bestimmte Beladung. Dafür ist das Kraftschlußkennfeld dreidimensional mit den Achsen, Wankwinkel, Korrekturlenkwinkel und Kraftschluß. Im folgenden kommt die Beladung als weiterer Parameter hinzu. Das Kraftschlußkennfeld ist hiermit fahrzeugspezifisch und im Bordrechner des Fahrzeuges abgespeichert.

Zur Ermittlung des momentanen Kraftschlußwertes im Betriebsfall wird wie folgt vorgegangen: Zunächst wird zu Beginn einer Fahrt, z. B. vom Fahrzeugführer veranlaßt oder automatisch der Beladungszustand ermittelt und als bekannt an den Rechner weitergeben. Zur ON-BOARD-Ermittlung des momentanen Kraftschlußwertes wird mit dem auftretenden Wankwinkel, dem auftretenden Korrekturlenkwinkel und der Beladung als Eingangsgröße aus dem Kraftschlußkennfeld der momentane Kraftschlußwert unmittelbar errechnet. Verringert sich z. B. der vorhandene Kraftschluß zwischen Reifen und Fahrbahn, so äußert sich dieses - bei Beibehaltung von Kurvenradius und Fahrgeschwindigkeit - in einer Erhöhung des Lenkwinkelbedarfs bei untersteuerndem Fahrzeug. Im Falle der Beibehaltung des Lenkwinkels wird das Fahrzeug einen weiteren Bogen fahren, d. h., der Wankwinkel geht zurück.

Da das Wanken eines Nutzfahrzeuges, abhängig vom Fahrzeugtyp und der Beladung, im Sekundenbereich erfolgt, ist die Erfassung des momentanen Krafftschlußwertes auch in diesem Bereich möglich. Ändert sich der Kraftschlußwert sehr schnell, so kann sich der Wankwinkel des Fahrzeuges nicht so schnell ändern. In einem solchen Fahrzustand geben der vorhandene Korrekturlenkwinkel, ob vom Fahrzeugführer korrigiert oder nicht, und der Wankwinkel, nicht das richtige Verhalten des Fahrzeuges wieder. Um diesem Vorgang Rechnung zu tragen und keine Fehlalarme auszulösen, wird die Vorgabe der Änderung des Soll-Wankwinkels dynamisch korrigiert, indem der auftretende Korrekturlenkwinkel mit einem dynamischen Verzögerungsglied beaufschlagt wird, so daß sich die gewünschte, zeitlich verzögerte und dem realen Vorgang angepaßte Änderung des rechnerischen Wankwinkels ergibt. Damit wird eine Anpassung des erwarteten Vorganges an den realen Vorgang erreicht. Zur Einstellung und einer eventuell späteren Prüfung der Funktion wird eine Sprungfunktion des Korrekturlenkwinkels eingegeben. Der Fahrzeugführer wird zwar nicht diese Sprungfunktion des Korrekturlenkwinkels erreichen, aber Reflexbewegungen des Fahrers auf einen plötzlich anderen Kraftschlußwert können sehr schnell sein. So wird auch seitens der möglichen Korrekturlenkwinkel-Änderung den tatsächlichen Verhältnissen Rechnung getragen. Das Maß der dynamischen Korrektur des Wankwinkels muß für jeden Fahrzeugtyp ermittelt und gespeichert werden.

Durch die Kenntnis des ermittelten, momentanen Kraftschlußwertes ist es erfindungsgemäß möglich, mit weiteren variablen Parametern, wie Fahrbahnneigung, Fahrbahnsteigung/-gefälle und dem Fahrzustand, wie Raddrehzahlen, Fahrzeuglängs- und Querbeschleunigungen, durch Vergleich des momentanen Kraftschlußwertes mit einem versuchsmäßig ermittelten Kraftschlußgrenzwert, abhängig von der Fahrbahngeometrie, das Bremspotential bzw. die Lenkbarkeit des Fahrzeuges zu errechnen und/oder anzuzeigen. Ist der momentane Kraftschlußwert größer als der gespeicherte Kraftschlußgrenzwert, so besteht Kippgefahr.

Dieses Verfahren gilt für Solofahrzeuge und für Zugfahrzeuge von Glieder- und Sattelzügen. Bei Sattelzügen ist der Knickwinkel zwischen Auflieger und Zugmaschine und bei Gliederzügen der Winkel zwischen Zugfahrzeug und Anhänger vorteilhafterweise mit einzubeziehen.

In den Zeichnungen ist ein Beispiel für die Durchführung des Verfahrens dargestellt. Es zeigen:

Fig. 1 ein Kraftschlußkennfeld,

Fig. 2 ein Wanksteifigkeitskennfeld,

Fig. 3 ein Diagramm der Lenksteifigkeit von Fahrzeugen,

Fig. 4 eine Zeichnung zur Angabe von Wankwinkeln,

Fig. 5 ein Kennfeld der Relativen-Lenk-Wanksteifigkeit,

Fig. 6 ein Diagramm über die Regelung des zeitlichen Aufbaues Wankwinkels,

Fig. 7 ein Bild über den Berechnungsablauf und

Fig. 8 ein Bild über den Regelungsablauf der ON-BOARD-Ermittlung.

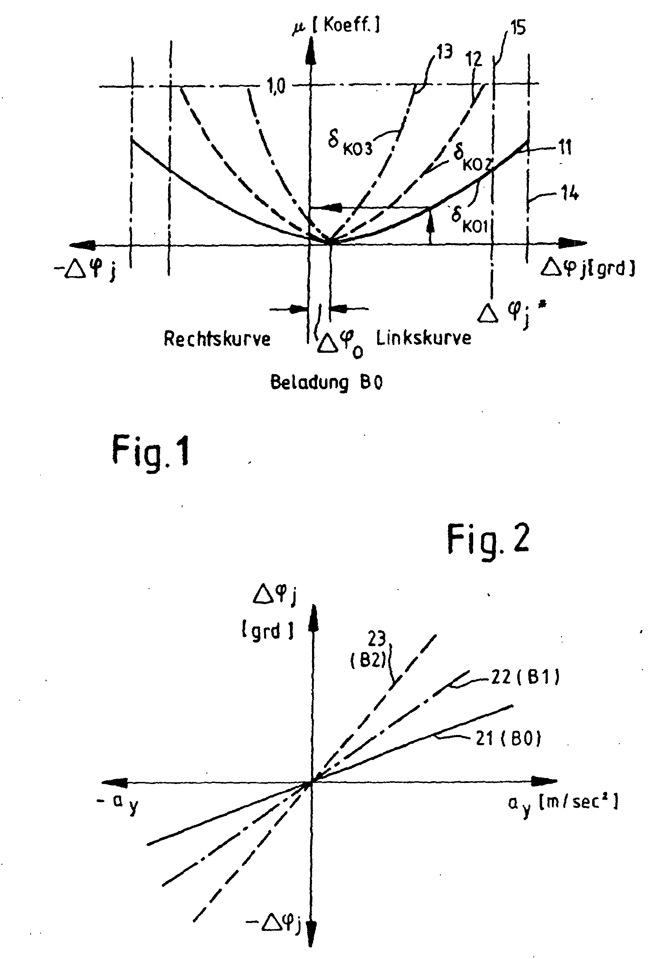

Ein Beispiel für das Verfahren der ON-BOARD-Ermittlung von Sicherheitsreserven von Nutzfahrzeugen nach der vorliegenden Erfindung, wird anhand der Fig. 1 bis 9 beschrieben.

Fig. 1 zeigt ein Kraftschlußkennfeld für einen bestimmten Beladungzustand, z. B. unbeladen B0. Das Kraftschlußkennfeld beschreibt den Zusammenhang zwischen den Eingangsgrößen, Korrekturlenkwinkel $\delta_K$, dem relativen Wankwinkel $\Delta\varphi_j$ und dem resultierenden Kratschlußwert $\mu$ in der Form

$$\mu = f\,(\delta_K, \Delta\varphi_j)$$

für B = const.

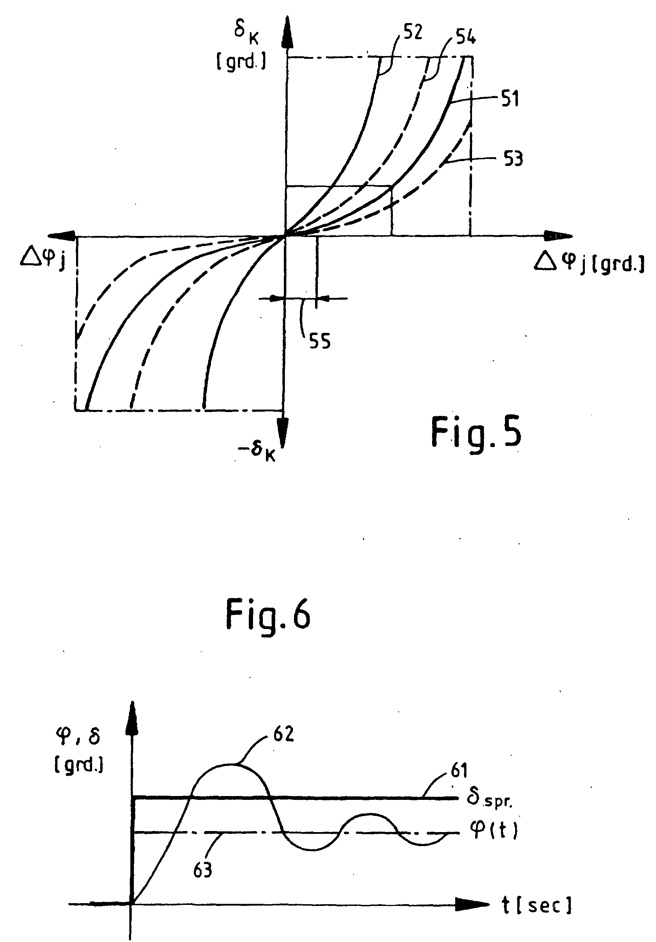

Die Kurven 11, 12, 13 kennzeichnen Fahrzustände für konstante Korrekturlenkwinkel und zwar $\delta_{K01} > \delta_{K02} > \delta_{K03}$. Die Approximation des Kennfeldes selbst erfolgt aus dem durch Messungen ermittelten Kennfeld der Relativen-Lenk-Wanksteifigkeit, Fig. 5, mit der

$$\text{Beziehung } \delta_K = g\,(\mu, \Delta\varphi_j).$$

Dieser Zusammenhang ist insbesondere meßtechnisch gut machbar, z. B. durch Meßfahrten auf einer Kreisfahrt-Versuchsbahn, welche ringförmig unterschiedliche Beläge bekannten Reibwertes aufweist.

Aus Fig. 1 ist auslesbar z. B., daß bei Vorliegen eines bestimmten Wankwinkels bei zunehmendem Korrekturlenkwinkel offensichtlich ein Verlust an Kraftschluß vorliegt. Das heißt, daß bei Kurve 11 ein großer Korrekturlenkwinkel $\delta_{K01}$ bei kleinem Kraftschlußwert $\mu$ (Eis), bei Kurve 12 ein mittlerer Korrekturlenkwinkel $\delta_{K02}$ bei mittlerem Kraftschlußwert $\mu$ (Schotterstraße), bei Kurve 13 ein kleiner Korrekturlenkwinkel $\delta_{K03}$, bei hohem Kraftschlußwert $\mu$ (trockener Asphalt) vorliegt. Die Kurvenschar muß nicht zwangsweise durch den Nullpunkt gehen, da eine bleibende Wankabweichung $\Delta\varphi_0$ sich durch einseitige Beladung einstellen kann. Die Grenzwertfläche rechts der Grenzwertlinie 14 bewegt sich im Bereich von 5° bis 7° (grd) und ist hauptsächlich vom Nutzfahrzeugtyp abhängig. Wird die Grenzwertlinie 14 bei ebener Fahrbahn überschritten, so rutscht das Fahrzeug bei niedrigen Kraftschlußwerten $\mu$, Kurve 11, bei hohen Kraftschlußwerten $\mu$, Kurve 13, kippt das Fahrzeug.

Fig. 2 zeigt ein Wanksteifigkeitskennfeld, aus dem der Beladungszustand, abhängig von der Querbeschleunigung und dem relativen Wankwinkel $\Delta\varphi_j$, hervorgeht. Das Kennfeld wird auf Kreisbahnfahrten in Fahrversuchen ermittelt und gilt für einen Fahrzeugtyp. Die Kurve 21 beschreibt ein nicht beladendes, die Kurve 22 ein teilbeladenes und die Kurve 23 ein vollbeladenes Fahrzeug. Der Beladungszustand, der sich zusammensetzt aus der Eigenmasse des Fahrzeuges mit seinem Schwerpunkt und den zusätzlichen Nutzlasten mit seinen Schwerpunkten, die auf dem Fahrzeug aufgeladen sind, kann mit

$$m_0 h_0^2 + m_N\, h_N^2 = m_{ges}\, h_{res,}^2$$

z. B. für ein teilbeladenes Fahrzeug, ausgedrückt werden, womit ein Zusammenhang zwischen der Gesamtlast $m_{ges}$ und einer resultierenden Schwerpunktlage $h_{res}$ hergestellt ist. Bei einem bestimmten Fahrzeug ist das Eigengewicht $m_0$ und sein Schwerpunktabstand $h_0$, z. B. zur Straße, immer gleich. Damit kann der Ausdruck $m_0 h_0^2$ als bekannt und unverändernd gespeichert werden. Zusätzliche Lasten und deren Schwerpunkte können durch Vergleich mit gespeicherten Daten ermittelt werden. So wird, vorzugsweise in einer Kurve, die dabei gemessene Querbeschleunigung $a_y$ und der gemessene relative Wankwinkel $\Delta\varphi_j$ mit den gespeicherten Daten verglichen. Daraus ergibt sich der Beladungszustand, welcher aus Masse und Schwerpunktlage des Gesamtfahrzeuges besteht. Der Fahrzeugführer kann den Zeitpunkt der Messung bestimmen, vorzugsweise erfolgt dies automatisiert. Die Meßdauer ist im Sekundenbereich und wird, nach Erfassung der Werte, automatisch beendet.

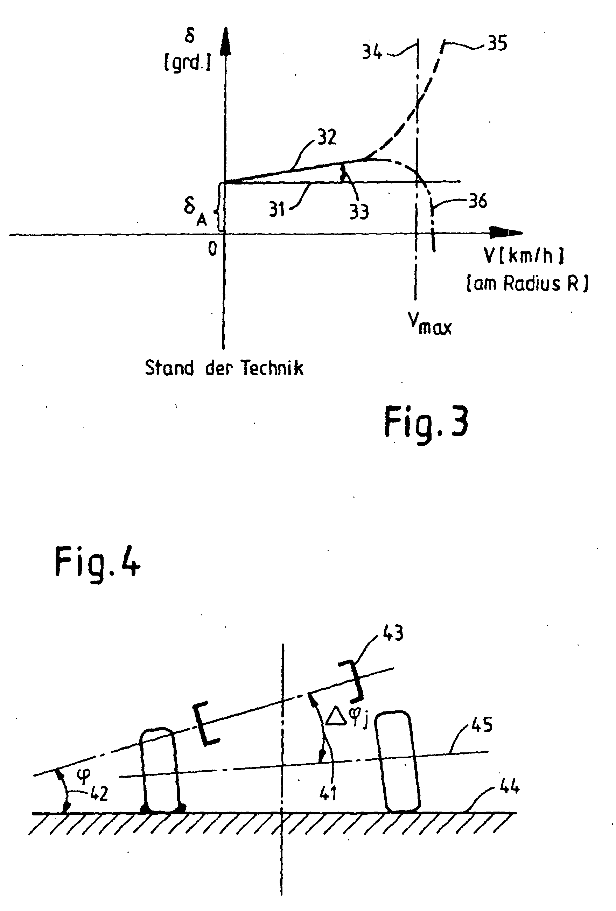

Fig. 3 zeigt ein Diagramm der bekannten Lenksteifigkeit von Fahrzeugen in einer Kurvenbahn. Die Gerade 31 zeigt den Ackermann-Lenkwinkel $\delta_A$, der zum Einhalten einer bestimmten Kurvenbahn erforderlich ist. Dies gilt allerdings nur nahe der Geschwindigkeit 0. Die Kurve 32 zeigt den tatsächlich erforderlichen Lenkwinkel $\delta$ (grd) im linearen Kraftschlußbereich. Der Abstand 33 ist der dynamische Korrekturlenkwinkel. Die Kurven 35 und 36 zeigen das Fahrverhalten eines Fahrzeuges im nichtlinearen Kraftschlußbereich, wobei die Kurve 35 für ein untersteuerndes und die Kurve 36 für ein übersteuerndes Fahrzeug gilt. Die bei der Kurvenfahrt resultierenden Raddrehzahldifferenzen können zur näherungsweisen Ermittlung des momentane Kurvenradius R verwendet werden und in der Folge mit den Geometriedaten des Fahrzeuges, wie z.B. Spurbreite und Radstand, zur Ermittlung des Ackermann-Lenkwinkels $\delta_A$ herangezogen werden.

Fig. 4 zeigt eine Zeichnung zur Angabe von Wankwinkeln. Die Wankneigung des Aufbaues bzw. des Fahrzeugrahmens 43 gegenüber der Fahrbahn 44 ist der absolute Wankwinkel $\varphi$, 42, und die Wankneigung des Fahrzeugrahmens 43 gegenüber einer Fahrzeugachse 45 ist der relative Wankwinkel $\Delta\varphi_j$, 41, zur j-ten Fahrzeugachse 45.

Fig. 5 zeigt ein Kennfeld der Relativen-Lenk-Wanksteifigkeit. Zur Approximation des Krafschlußkennfeldes werden vorzugsweise nach der Relativen-Lenk-Wanksteifigkeit die Werte relativer Wankwinkel $\Delta\varphi_j$ und dynamischer Korrekturlenkwinkel $\delta_K$, abhängig vom Fahrzeuggewicht und dem Kraftschlußwert ermittelt und gespeichert. Die Kurve 52 betrifft beispielhaft ein leeres Nutzfahrzeug bei niedrigem Kraftschlußwert $\mu_L$, die Kurve 51 dasselbe leere Nutzfahrzeuge bei hohem Kraftschlußwert $\mu_h$. Die Kurve 54 betrifft dasselbe Nutzfahrzeug mit einer bestimmten Beladung B1 und dem gleichen niedrigen Kraftschlußwert $\mu_L$, wie bei Kurve 52 und die Kurve 53 betrifft dasselbe Fahrzeug mit derselben Beladung B1 und dem gleichen hohen Kraftschlußwert $\mu_h$, wie bei Kurve 51. Das Kennfeld kann auf einer Kreisfahrt-Versuchsbahn mit mehreren ringförmig angeordneten Fahrstreifen unterschiedlicher Fahrbahnbeläge ermittelt werden. Die Kurvenschar muß nicht zwangsweise durch den Nullpunkt gehen, sie kann auch versetzt um den Winkel $\Delta\varphi o$ Betrag 55, die Abszisse kreuzen.

Fig. 6 zeigt den zeitlichen Aufbau des Wankwinkels $\varphi(t)$. Während sich der Kraftschluß $\mu$ schlagartig ändern kann, z. B. durch unterschiedliche Fahrbahnbeläge, so kann der Wankwinkel $\varphi$ des Nutzfahrzeuges trägheitsbedingt nur verzögert folgen. Damit die Reaktionen des Fahrzeugführers realitätsnah bewertet werden, ist es nötig, ein reales Wankverhalten des Fahrzeuges vorzugeben, um den zeitlichen Aufbau des Wankwinkels $\varphi(t)$ zu berücksichtigen. Der verzögerte Aufbau des Wankwinkels $\varphi(t)$ des Fahrzeuges wird durch die Kurve 62 beschrieben, die sich zeitlich einpendelt auf den stationären Wankwinkel 63. Die dazu nötige Änderung des Lenkwinkels $\delta_{Spr.}$, Kurve 61, ist die programmierte Lenkwinkeländerung als Eingangsgröße, die so verzögert wird, daß sich die Kurve 62, Aufbau des Wankwinkels $\varphi(t)$ ergibt. Die Eingabe der Kurve 61 in den Rechner in dieser Form hat neben der realitätsnahen Reaktion durch den Fahrer, auch den Vorteil, daß die Eingabe einheitlich und das Regelverhalten jederzeit überprüfbar ist.

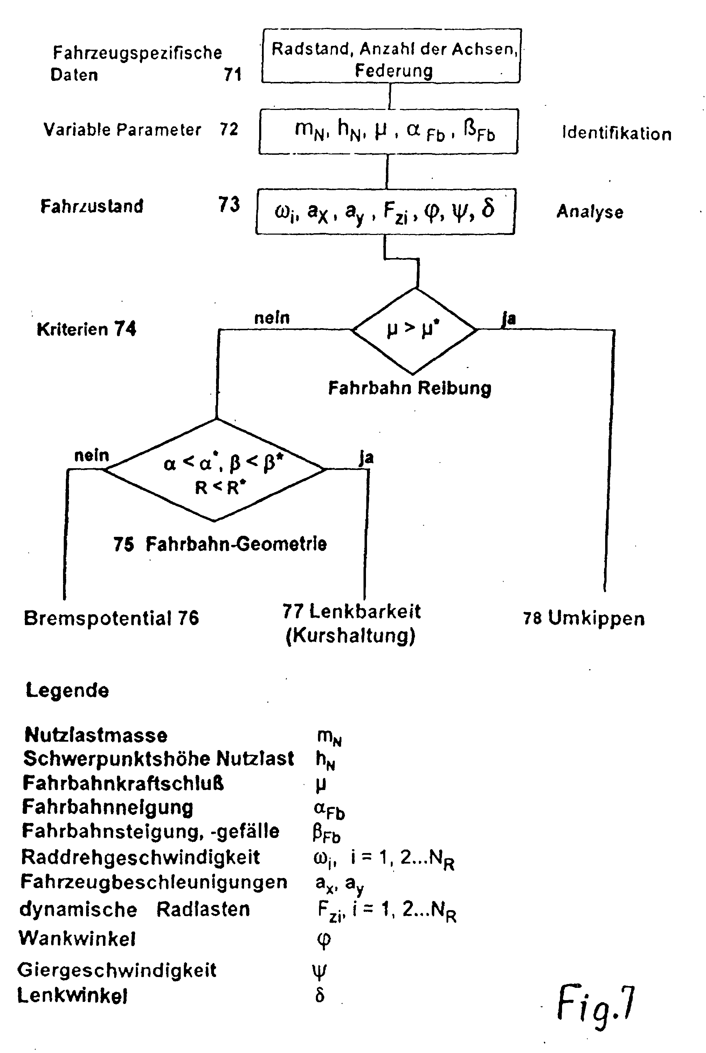

Fig. 7 zeigt ein Bild über den Berechnungsablauf zur Berechnung von Sicherheitsreserven. Berücksichtigt werden fahrzeugspezifischen Daten 71, variable Parameter 72, der Fahrzustand 73, Kriterien 74 des Fahrbahnkraftschlusses und der Fahrbahngeometrie. Aus diesen Werten wird das Bremspotential 76, die Lenkbarkeit 77 und die Sicherheit 78 gegen das Umkippen des Nutzfahrzeuges ermittelt.

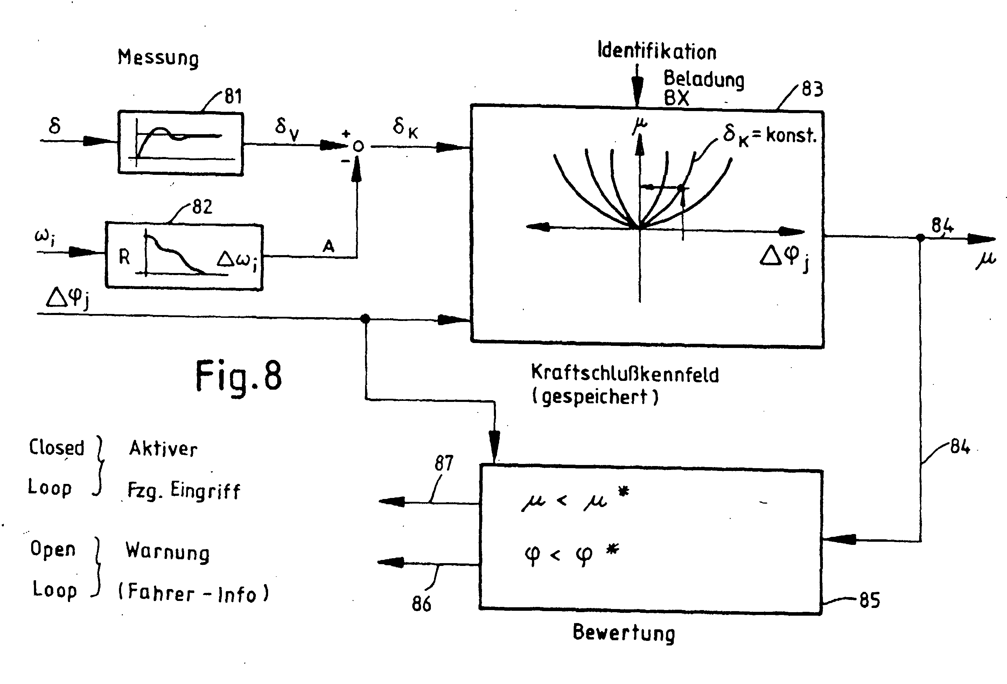

Fig. 8 zeigt ein Bild über die ON-BOARD-Ermittlung des Kraftschlusses $\mu$ und seiner Bewertung. Eingangsgrößen sind zunächst der Lenkwinkel $\delta$, die Raddrehzahlen $\omega_i$ und der Relative-Wankwinkel. Aus den Raddrehzahldifferenzen $\Delta\omega i$ wird der Ackermann-Lenkwinkel $\delta_A$ gemäß 82 berechnet, der mit dem absoluten Lenkwinkel $\delta$ den Korrekturlenkwinkel $\delta_K$ ergibt. Um den trägheitsbedingt verzögerten Aufbau des Wankwinkels $\Delta\varphi j$ zu kompensieren, bedarf es eines Verzögerungsgliedes 81 für den Lenkwinkel $\delta$. Die zuvor identifizierte Beladung BX bzw. $m_{ges}$ bildet eine weitere Eingangsgröße in den Prozeßblock 83 zur Bestimmung des aktuellen Kraftschlußwertes $\mu$, gemäß 84. In Kenntnis des aktuellen Kraftschlußwertes $\mu$ können in der Folge geeignete Bewertungsstrategien abgleitet werden.

Im Prozeßblock 85 werden z. B. der aktuelle Kraftschlußwert p mit dem Grenzkraftschlußwert $\mu^*$ verglichen, oder der aktuelle Wankwinkel $\varphi$ mit dem definierten Grenzwankwinkel $\varphi^*$. Die Auswertung selbst erfolgt auf der Grundlage der in Fig. 7 dargestellten Zusammenhänge. Insbesondere lassen sich die gewonnenen Ergebnisse entweder in der Form sichtbarer, hörbarer oder spürbarer Informationen als Fahrerwarnung, gemäß 86 als "Open Loop" - oder direkt zum weiteren aktiven Eingriff in das Fahrzeugsystem gemäß 87 als "Closed Loop" -Lösung umsetzen.

**Patentansprüche**

1. Verfahren zur ON-BOARD-Ermittlung von fahrdynamischen Sicherheitsreserven von Nutzfahrzeugen, **dadurch gekennzeichnet, daß** der Kraftschluß ($\mu$) zwischen Rädern und Fahrbahn eines definierten Nutzfahrzeuges (71) in einem beliebigen bekannten Beladungszustand mittels eines gemessenen Wankwinkels ($\varphi$) und eines gemessenen Korrekturlenkwinkels ($\delta_k$) durch Vergleich mit entsprechenden, im Testversuch gemessenen und in einem Rechner abgespeicherten Daten ermittelt wird.

2. Verfahren nach Anspruch 1, **dadurch gekennzeichnet, daß** der relative Wankwinkel ($\Delta\varphi j$) zwischen mindestens einer Fahrzeugachse (45) und dem Aufbau (43) als Bewertungskriterium verwendet wird.

3. Verfahren nach Anspruch 1, **dadurch gekennzeichnet, daß** der Beladungszustand (B) aus einer gemessenen Querbeschleunigung ($a_y$) und einem gemessenen Wankwinkel ($\varphi$) und durch Vergleich von entsprechenden, im Testversuch gemessenen und in einem Rechner abgespeicherten Daten ermittelt wird.

4. Verfahren nach Anspruch 1, **dadurch gekennzeichnet, daß** erforderliche Korrekturlenkwinkel ($\delta_k$) aus bekannten Wankwinkeln ($\varphi$) und bekannten Kraftschlußwerten ($\mu$) aus Fahrversuchen ermittelt und abgespeichert sind.

5. Verfahren nach einem oder mehreren der vorhergehenden Ansprüche, **dadurch gekennzeichnet, daß** rechnerisch ein dynamisch korrigierter Aufbau des Wankwinkels $\varphi(t)$ nach vorgegebenem Verhalten (61, 62, 63) so durchgeführt wird, daß sich eine annähernde Übereinstimmung des erwarteten, rechnerisch ermittelten Vorganges mit dem realen Vorgang ergibt.

6. Verfahren nach einem oder mehreren der Ansprüche 1 bis 5, **dadurch gekennzeichnet, daß** die gemessenen Werte mit fahrzeugspezifischen Daten (71), weiteren variablen Parametern (72) und dem Fahrzustand (73) rechnerisch miteinander verbunden und mit Grenzwerten ($\mu$, $\mu^*$, $\delta$, $\delta^*$, $\beta$, $\beta^*$, R, R*) verglichen und daraus die fahrdynamischen Sicherheitsreserven für das Bremsen (76), die Lenkbarkeit (77) und gegen das Umkippen (78) des Nutzfahrzeuges ermittelt werden.

7. Verfahren nach Anspruch 6, **dadurch gekennzeichnet, daß** die fahrdynamischen Sicherheitsreserven des Nutzfahrzeuges für den Fahrer sichtbar, hörbar oder spürbar dargestellt werden.

8. Verfahren nach Anspruch 6, **dadurch gekennzeichnet, daß** bei Beginn kritischer Fahrzustände automatisch Eingriffe in das Fahrzeugsystem des Nutzfahrzeuges durchgeführt werden.

**Claims**

1. A process for the on-board determination of safety reserves relating to vehicle dynamics of commercial vehicles, **characterised in that** the frictional connection ($\mu$) between the wheels of a defined commercial vehicle (71) in any known state of loading and the roadway is determined by means of a measured angle of roll ($\varphi$) and a measured corrective steering angle ($\delta_k$) by comparison with corresponding data measured in a test trial and stored in a computer.

2. A process according to Claim 1, **characterised in that** the relative angle of roll ($\Delta\varphi_j$) between at least one vehicle axle (45) and the body (43) is used as an evaluation criterion.

3. A process according to Claim 1, **characterised in that** the state of loading (B) is determined from a measured transverse acceleration ($a_y$) and a measured angle of roll ($\varphi$) and by comparison of corresponding data measured in a test trial and stored in a computer.

4. A process according to Claim 1, **characterised in that** necessary corrective steering angles ($\delta_k$) are determined from known angles of roll ($\varphi$) and known frictional connection values ($\mu$) from vehicle trials, and are stored.

5. A process according to one or more of the preceding claims, **characterised in that** the dynamically corrected line developed by the angle of roll $\varphi(t)$ is calculated by computer in accordance with predetermined behaviour (61, 62, 63) such that an approximate correspondence is obtained between the expected event determined by computer and the actual event.

6. A process according to one or more of Claims 1 to 5, **characterised in that** the measured values with data (71) specific to the vehicle, further variable parameters (72) and the driving state (73) are linked to one another by computer and compared with limit values ($\mu$, $\mu^*$, $\delta$, $\delta^*$, $\beta$, $\beta^*$, R, R*) and from this the safety reserves relating to vehicle dynamics are determined for the brakes (76), the degree of lock (77) and to prevent tipping (78) of the commercial vehicle.

7. A process according to Claim 6, **characterised in that** the safety reserves relating to vehicle dynamics of the commercial vehicle are displayed to the driver in visible, audible or perceptible manner.

8. A process according to Claim 6, **characterised in that** at the start of critical driving states automatic interventions into the vehicle system of the commercial vehicle are carried out.

**Revendications**

1. Procédé de détermination embarqué des réserves de sécurité de dynamique de roulement de véhicules utilitaires,
   **caractérisé en ce que'**
   on détermine l'adhérence ($\mu$) entre les roues et la chaussée d'un véhicule utilitaire (71) déterminé dans un état de charge connu, quelconque, à l'aide de l'angle de basculement ($\varphi$), mesuré, et d'un angle de correction de braquage ($\delta_K$), mesuré en comparant avec des données correspondantes, mesurées dans des essais et mémorisées dans un calculateur.

2. Procédé selon la revendication 1,
   **caractérisé en ce qu'**
   on utilise l'angle de basculement ($\Delta\varphi_j$) entre au moins un axe (45) du véhicule et la carrosserie (43) comme critère d'exploitation.

3. Procédé selon la revendication 1,
   **caractérisé en ce qu'**
   on détermine l'état de charge (B) à partir de l'accélération transversale mesurée ($a_y$) et d'un angle de basculement mesuré ($\varphi$) et par la comparaison avec des données correspondantes, mesurées dans un essai et enregistrées dans un calculateur.

4. Procédé selon la revendication 1,
   **caractérisé en ce qu'**
   on détermine l'angle de correction de braquage ($\delta_K$), nécessaire à partir des angles de basculement ($\varphi$), connus, et des valeurs d'adhérence ($\mu$) à partir d'es-

sais de roulement et on les mémorise.

5. Procédé selon l'une quelconque des revendications précédentes,
**caractérisé en ce qu'**
on effectue par le calcul une construction dynamique corrigée de l'angle de basculement ($\varphi(t)$) selon un comportement prédéterminé (61, 62, 63) pour avoir une concordance approximative entre l'opération prévisible obtenue par le calcul et l'opération réelle.

6. Procédé selon une ou plusieurs des revendications 1 à 5,
**caractérisé en ce qu'**
on combine par le calcul les valeurs mesurées et des données spécifiques au véhicule (71) avec d'autres paramètres variables (72) et l'état de roulement (73), on compare à des valeurs limites ($\mu$, $\mu^*$, $\delta$, $\delta^*$, $\beta$, $\beta^*$, R, R$^*$), et on détermine les réserves de sécurité dynamique de roulement pour le freinage (76), la direction (77) et le basculement (78) du véhicule utilitaire.

7. Procédé selon la revendication 6,
**caractérisé en ce que**
les réserves de sécurité de dynamique de roulement du véhicule utilitaire sont présentées au conducteur de manière lisible, sonore, ou perceptible.

8. Procédé selon la revendication 6,
**caractérisé en ce qu'**
au début d'état de conduite critique, des interventions automatiques sont faites dans le système du véhicule utilitaire.

EP 0 758 601 B1

Fig. 1

Fig. 2

8

Stand der Technik

# Fig. 3

# Fig. 4

Fig.5

Fig.6

| Fahrzeugspezifische Daten 71 | Radstand, Anzahl der Achsen, Federung | |
| Variable Parameter 72 | $m_N, h_N, \mu, \alpha_{Fb}, \beta_{Fb}$ | Identifikation |
| Fahrzustand 73 | $\omega_i, a_X, a_y, F_{zi}, \varphi, \psi, \delta$ | Analyse |

**Kriterien 74**

nein — $\mu > \mu^*$ — ja

**Fahrbahn Reibung**

nein — $\alpha < \alpha^*, \beta < \beta^*$ $R < R^*$ — ja

**75 Fahrbahn-Geometrie**

Bremspotential 76     77 Lenkbarkeit (Kurshaltung)     78 Umkippen

**Legende**

| | |
|---|---|
| **Nutzlastmasse** | $m_N$ |
| **Schwerpunktshöhe Nutzlast** | $h_N$ |
| **Fahrbahnkraftschluß** | $\mu$ |
| **Fahrbahnneigung** | $\alpha_{Fb}$ |
| **Fahrbahnsteigung, -gefälle** | $\beta_{Fb}$ |
| **Raddrehgeschwindigkeit** | $\omega_i, \ i = 1, 2...N_R$ |
| **Fahrzeugbeschleunigungen** | $a_x, a_y$ |
| **dynamische Radlasten** | $F_{zi}, i = 1, 2...N_R$ |
| **Wankwinkel** | $\varphi$ |
| **Giergeschwindigkeit** | $\psi$ |
| **Lenkwinkel** | $\delta$ |

*Fig.7*

EP 0 758 601 B1

Messung

Identifikation

$\delta$ —[ 81 ]— $\delta_V$ —+O— $\delta_K$

Beladung BX — 83

$\mu$  $\delta_K$ = konst.

$\Delta\varphi_j$

$\omega_i$ —[ R   82   $\Delta\omega_i$ ]— A

$\Delta\varphi_j$

84

$\mu$

## Fig.8

Kraftschlußkennfeld
(gespeichert)

Closed } Aktiver
Loop } Fzg. Eingriff

Open } Warnung
Loop } (Fahrer - Info)

87

86

$\mu < \mu^*$

$\varphi < \varphi^*$

84

85

Bewertung